# EUROPEAN PATENT APPLICATION

(11) **EP 1 452 983 A2**
(43) Date of publication of application: **01.09.2004**
(21) Application number: 04250796.2
(22) Date of filing: 13.02.2004
(51) Int. Cl.: G06F 17/30

(54) **Database system**

(30) Priority: 27.02.2003 GB 0304533
(71) Applicant: Cmed Group Ltd., Horsham, West Sussex RH12 4PN (GB)
(72) Inventor: Corbett-Clark, Timothy Cmed Technology Ltd, Horsham West Sussex RH12 4PN (GB)
(74) Representative: Nicholls, Michael John

(57) **Abstract**

A database system which uses a hierarchical structure of data nodes. The nodes are of two types, tag nodes forming the hierarchical structure, each tag node having one or more data storing audit nodes as children. Data entered into the database is stored in the audit nodes and changes to the stored data are made by the addition of new versions of the audit nodes such that the audit nodes form an audit trail for the database. Current data is viewed by supplying via the tag node the most recently added child, and older versions of the database are similarly supplied via the tag nodes transparently presenting older versions of the time-stamped audit nodes. The tag nodes may store data which has been automatically deduced from the data in the audit nodes. Both data and the data structure may be selectively replicated throughout the database using an efficient algorithm.

## Description

The present invention relates to a database system, that is to say a database and a database management system which defines, constructs and manipulates the database.

Many different types of database systems have been proposed and used. Two typical types of structure are a hierarchical database which has a tree-like structure and a relational database in which the data is arranged into linked tables. Hierarchical databases were traditionally used on large mainframe computer systems, but recently relational databases have become much more popular, because of their simple data model and their flexibility. International standards have been established for relational databases and software and support tools for relational databases are available off the shelf. Therefore when designing a database at the moment the relational model is the natural choice amongst specialists in the area.

The requirements of a database system vary greatly from application to application. Typical factors to be considered are the type and amount of data to be stored, the number of users, the location of users (i.e. whether they are on one site or whether they are multi-site and possibly multi-country), the need for security, the need for flexibility and scalability, and the need for secure audit trails which record the changes to the data being stored.

An example of a demanding application is the collection and management of clinical trials data. In the development of new drugs lengthy and expensive clinical trials are required in order to establish the safety and efficacy of drugs. The early stages involve relatively small numbers of patients and are not particularly demanding of data storage and management facilities. However, the stage known as Phase III involves large numbers of patient volunteers on multiple sites, usually in multiple countries. The tests making up this phase may be conducted over a period of three to six months or even longer. The process usually involves patient volunteers attending clinics where physiological measurements are taken (ECG, blood pressure, heart rate, temperature, weight etc) and subjective comments recorded. This information is entered onto a case record form (CRF) which is retained. At the end of the trial all of the CRF's are collated and entered into a database. This database is then submitted to the regulatory authorities for approval.

An application like this makes heavy demands of a database system. The data is in several different forms, including text and measurements from diagnostic devices, and is also prepared in many different places by many different users. In a typical paper-based system, up to 15% of the data collected in the trial may be unusable for various reasons. While computer-based database systems have been proposed, there are still problems. The transfer of data from remote sites in many countries presents security problems. It is necessary to be sure that the data has been prepared and submitted by an authorised person, and it is necessary to log accurately in an audit trail any changes which are made to the data. This is particularly difficult in a multi-site, multi-user environment in which network connectivity is intermittent and of low bandwith.

Further, a database system for this sort of application needs to be quite flexible. It needs to be possible to add users and patients easily, to be adaptable to different sites and countries, and also adaptable to different types of trial. In operation it is important that user access is reliable and not dependent upon obtaining a connection to a central server (which may be in a different country, in a different time zone). It is also necessary to guarantee reliable transmission of that data when a connection becomes available.

Similar requirements for flexibility combined with reliability and security are also present in other applications of database systems.

In accordance with the present invention there is provided a database system for storing data in a database, the database comprising a structure of linked data nodes corresponding to a natural hierarchy of the data, the nodes being of two types: tag nodes, forming the linked structure of the database, and audit nodes which are children of tag nodes, data at a particular level of the natural hierarchy being entered into the database being stored in audit nodes formed on entry of said data as children to the tag node at the point in the structure corresponding to said level, the audit nodes being undeletable and timestamped, changes to the stored data being effected by the addition of new audit nodes, whereby the audit nodes form an audit trail for the database.

Thus the system of the invention exploits a natural hierarchy in the data and provides a structure of linked data nodes which corresponds to that natural hierarchy. This allows for a simple database design, for a variety of applications, without the complexity of joining tables as in a relational database. Further, the structure of the database can readily be exposed to the user which reduces the semantic distance between the user and the underlying representation. This results in a more reliable system (because the code establishing the database is simpler, easier to write, maintain, and test) and a simpler user-interface (because of greater unification and fewer special cases). The linked structure corresponding to the hierarchy also provides natural summary points for viewing the status of data at different levels in the hierarchy. This same structure also provides natural divisions of the data for replication across the database. For example, in the application of this system to clinical trials management, a work station at a particular centre only needs data for that centre, and a country-based "server" only needs data for that country. The structure therefore reduces the central-server bottleneck and makes possible a robust, load-balanced and algorithmically efficient structure of servers. The use of the structure also allows a natural control of user access, such as restricting certain users to their own centre, or country managers to their country, and the use of this structure also avoids the high maintenance overheads present in relational databases.

The presence of the audit nodes as children at each tag node provides in a natural and easy way an audit trail for the database. Thus all data entered into the database by the users is stored as audit nodes which are children to a tag node at a certain level in the structure and the "current" data is provided simply by the tag node returning the data from the most recent audit node. For example, if a page of data is entered by a user, and that page is subsequently corrected, both the original and the corrected versions are stored as audit notes of the same tag node, with the corrected version naturally being the most recent audit node having the most recent time stamp. However the presence of the undeletable and time-stamped original provides the required audit trail.

The tag nodes may store secondary data, which is data which has been automatically deduced from data in the audit nodes. This may be summary data summarising the content of audit nodes below the tag node and this allows such summary data to be provided quickly and easily on request.

Different versions of the data in the database may be generated by reference to the time stamps recorded on the audit nodes. Thus the most recent version of the database is viewed by having the tag nodes present the data from the most recent audit nodes. Similarly, the version of the data at a particular time t in the past can be viewed by having the tag nodes present the data from the most recent audit node created before that particular time t.

Data may be replicated between computers by copying structure (tag nodes) and data (audit nodes). Only data below given positions in the hierarchy need be replicated, and computing which nodes to replicate may be achieved by mathematical set subtraction, where the two sets are the set of data on (say) computer A below point P, and the set of data on (say) computer B also below point P.

Preferably the audit nodes comprise pages of data which have been digitally signed by the user to ensure their authenticity. Such digital signature may be effected by means of a biometric, such as an iris scan, fingerprint or the like and a method for this is disclosed in WO 01/91025 incorporated herein by reference.

Each node may have a unique identification code, for example formed from codes representing the work station, the sequence for that work station, a counter for that sequence and the user. This code may be converted into a barcode which can be used to code physical items, such as reports, a sample etc either by printing on to the item or printing on to a label which is affixed to the item. The uniqueness of the ID code for every node in the system means that these codes may be used as the keys for hyperlinks around the database. Thus a user does not only have to navigate the database according to its hierarchical structure. Printing these codes (conveniently for example as barcodes) creates "printable hyperlinks", which provides the benefit of directed and fast navigation from non-electronic sources.

Preferably the configuration of the graphical user interfaces which guide entry of data to the database are controlled by configuration data also stored in audit nodes distributed across the database. Thus the configuration of the graphical interface may be changed for different areas simply by replication of new audit nodes to those areas. The fact that the configuration data is stored audit nodes (which are undeletable and time stamped) provides version control for the configuration data. The configuration data may be stored on audit nodes which are children of a tag node at a higher level in the hierarchy, such that to determine the format for a graphical user interface a workstation looks "upwards" in the hierarchy until it finds the necessary configuration data. Thus the location within the hierarchy of the configuration data is meaningful. Configuration data at point P near the leaves of the hierarchy is local specialisation, and only used when the user interface is viewing data below point P. Similarly, configuration data near the root of the hierarchy is general, and may end up being used by the user interface in most of the hierarchy (unless it is "overridden" by more specialist configuration data lower in the hierarchy). In this way the hierarchy provides an effective means of controlling standards.

Thus, in summary, the invention can provide a database system which uses a hierarchical structure of data nodes. The nodes are of two types, tag nodes forming the hierarchical structure, each tag node having one or more data storing audit nodes as children. Data entered into the database is stored in the audit nodes and changes to the stored data are made by the addition of new versions of the audit nodes such that the audit nodes form an audit trail for the database. Current data is viewed by supplying via the tag node the most recently added child, and older versions of the database are similarly supplied via the tag nodes transparently presenting older versions of the time-stamped audit nodes. The tag nodes may store data which has been automatically deduced from the data in the audit nodes. Both data and the data structure may be selectively replicated throughout the database using an efficient algorithm.

The invention will be further described by way of example with reference to the accompanying drawings in which:-
Figure 1 illustrates a natural hierarchy in a clinical trials application;
Figure 2 is a flow diagram illustrating the operation necessary in such an application;
Figure 3 illustrates an example of an electronic case record form;
Figure 4 illustrates part of the structure of the database in the clinical trials application;
Figure 5 is an example of a barcode corresponding to a node identifier; and
Figure 6 shows an example of deduced data in an embodiment of the invention.

An embodiment of the invention will be described in which the database system is applied to a clinical trials data management system. A general description of the system and operations will be given first.

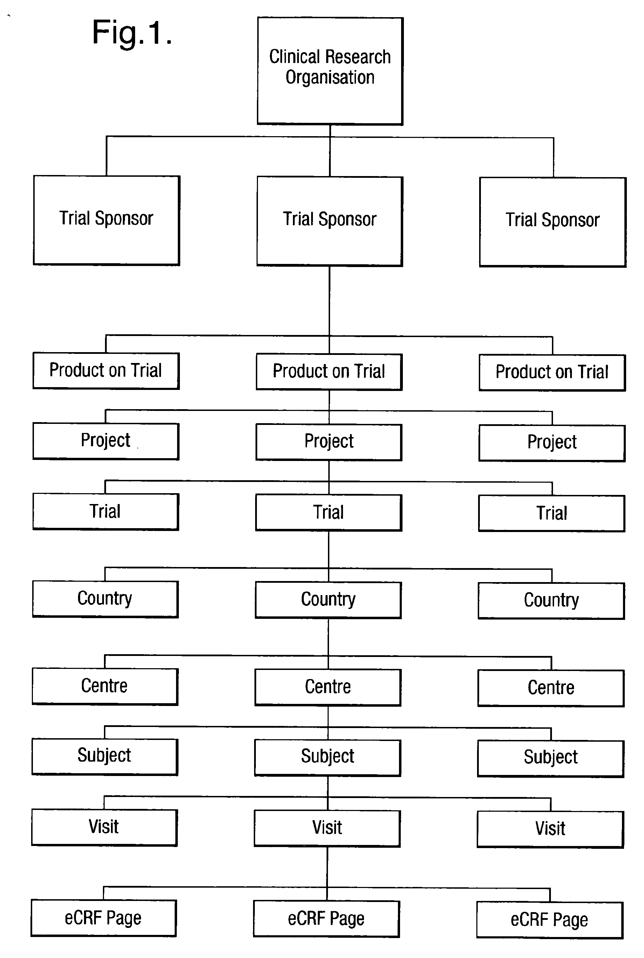

Typically clinical trials are conducted by specialist clinical research organisations (CRO) on behalf of a trial sponsor, for example the drug company whose product is being tested. Figure 1 illustrates the natural data hierarchy which exists in this application. At the top level is the clinical research organisation, which often does work for more than one pharmaceutical sponsor. At the second level are the different trial sponsors for whom the clinical research organisation works. At the third level are the different products on trial, there may be more than one for each sponsor. A single product may have multiple projects associated with it, for example exploring different clinical indications, and so the next level is the different projects for each product. Each project may include more than one clinical trial such that the trial appears as the next level, and each trial may be a multi-country undertaking such that the country is the next level in the hierarchy. Within each country there are usually several different geographical centres, for instance a county or state or hospital, and each centre will see a number of subjects who are the individual patient volunteers. Each subject will make a number of visits to the centre so the next level in the hierarchy is these visits and within each visit there are usually a number of clinical tests and other clinical information which needs to be recorded in an electronic case record form (eCRF) prescribed within the trial protocol. Consequently the lowest level is the eCRF page. It will be appreciated that for simplicity in Figure 1 only one downwards branch has been illustrated for each level.

The database system of the invention is maintained on a network of general purpose personal computers, though in this embodiment each is dedicated to the running of the database system. In other words, each workstation is incapable of running any other applications (e.g. web browsers, e-mail, games, other business applications etc) instead becoming a dedicated workstation for this database system. The network may be intermittent and have low bandwidth, such as modem dial-up over landline or mobile phone. Establishing a network connection is handled automatically without user intervention. This system is structured so that each workstation is essentially self-contained and usable independently of any live connection - the workstations synchronising by way of data replication when connections become available.

The users of the system, each of whom are provided with a workstation, may be characterised into the following groups:
1) Clinical data associate (CDA) who is primarily responsible for data entry and basic data processing.
2) Clinical data manager (CDM) who is responsible for data entry and all processing tasks. The CDM is the point of contact between investigators and trial monitors and the data management team.
3) Clinical coding specialist (CCS) who is responsible for clinical coding.
4) Systems administrator (SA) who is primarily responsible for system setup, controlling the users, groups and associated privileges.
5) The manager, who is responsible for the trial metrics and management information.
6) The statistician who is responsible for data analysis, including the generation of SAS data sets.
7) The study designer/programmer who creates and maintains the structures such as the eCRFs and online documentation and also is responsible for creating and maintaining data validation programs.
8) The randomisation administrator who is responsible for entering and manipulating randomisation codes, that is the blind treatment groups to which each subject belongs.

The users may adopt different roles which give them different permissions in the system. The different permissions may involve different privileges for viewing data, altering data and entering data. An example of the different roles in this embodiment are:-
1) Archivist;
2) Coding;
3) Design;
4) Double entry;
5) Laboratory;
6) Programming;
7) Readonly;
8) Statistics;
9) Subject enrolment;
10) Systems administration;
11) Validation;
12) Verification;
13) Document tracking;
14) Randomisation administration;
15) Management administration;
16) Quality control; and
17) Electronic loading.

The different users may take on several different roles, so each workstation is capable of adopting the different roles required for that user.

The workstations run a number of loosely coupled processes or applicants, called services which together form the database management system, each of which has clearly defined and non-overlapping objectives.

The principle services are:
- **Gui,** a Graphical User Interface which controls interaction with the system (keyboard, mouse, and screen)
- **replicate**, which is responsible for selectively synchronising stations;
- **network**, which is responsible for enabling stations to communicate over a network (e.g. by configuring network cards or dialling-up modems);
- **deduciblemaker**, which locally maintains frequently required meta-information;
- **myids and ids**, which are responsible for computing what data is present on different stations;
- **database**, which is responsible for providing a hierarchical database in the structure described below with reference to Figures 1, 3 and 5;
- **channels & multicast**, services which themselves enable interservice communication;
- **angel**, a meta-service which is responsible for starting all the services, keeping them running, and shutting them down.

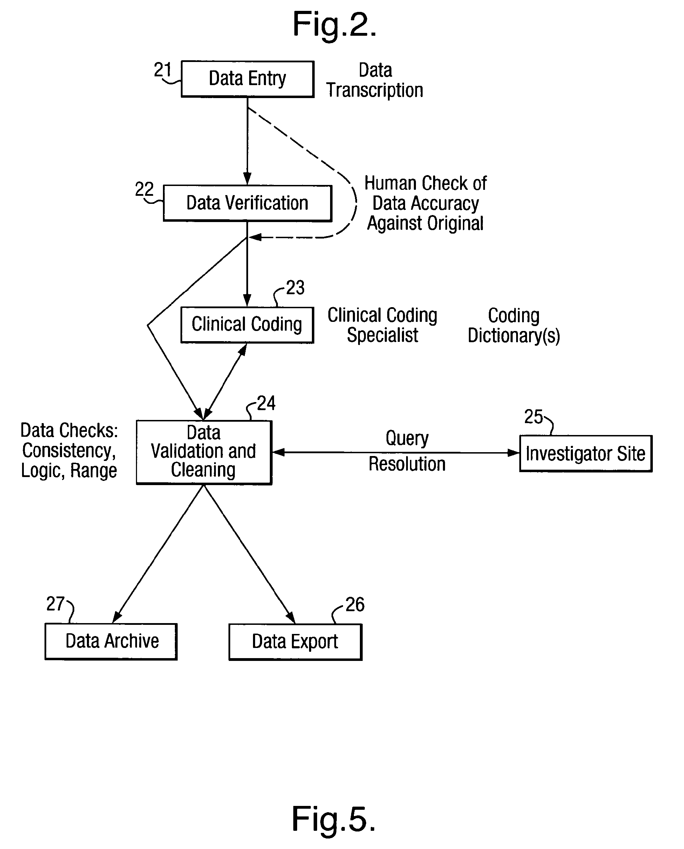

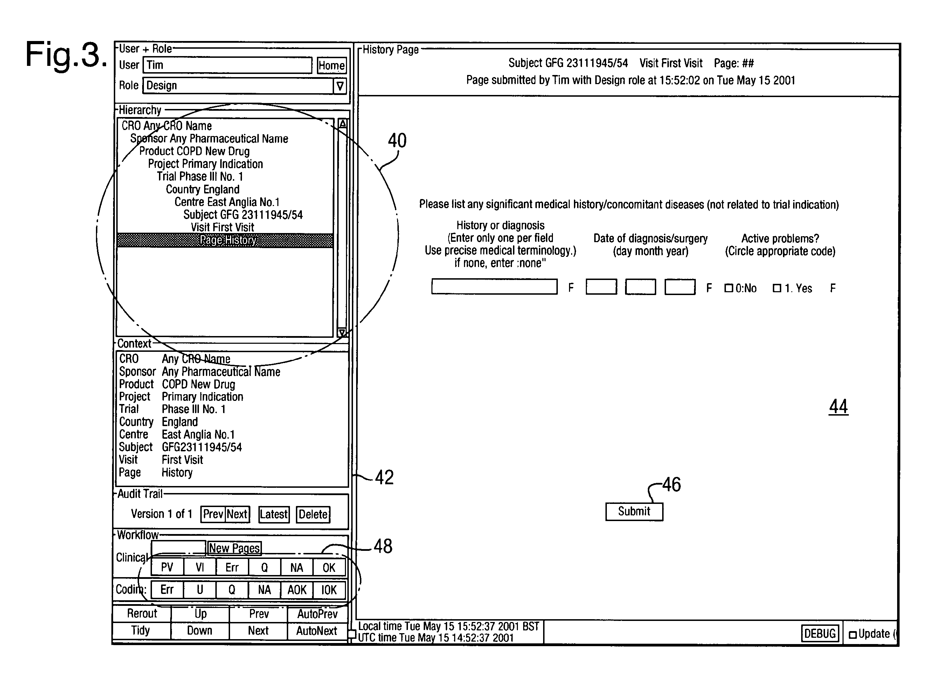

Figure 2 illustrates the general operations which are provided for in the clinical trials system. Clearly data entry 21 is required, this may be direct entry by the clinician using a workstation at the time of a patient visit or data may be transcribed from paper records. An example of an eCRF page used for data entry is shown in Figure 3. It can be seen that the natural hierarchy is reproduced in this page in the hierarchy window 40 and in the context window 42. In this embodiment the context window 42 always illustrates the full information right back to the CRO, whereas the hierarchy window 40 can be rerouted to start from any point on the hierarchy. The eCRF form includes a data entry window 44, submit button 46 and an array of flags 48 which are used to filter and search for data satisfying criteria such as whether the data has been verified, whether it has an error, whether it has not been entered etc. These forms will be completed by users who have logged on to the system using a biometric, their identity and biometric being used to digitally sign the completed form on submission.

The entered data may need to be verified at step 22, which is a human check of the accuracy of the entered data against the original. The data may need clinical coding at step 23 which is an operation usually taken by clinical coding specialists and involves the coding of the data into standard medical terms from standard coding dictionaries, such as MedDRA.

The step 24 of data validation and cleaning involves attempting to spot erroneous data, such as by checking the consistency of the data, its range against known ranges etc. This operation is conducted by separate validators who log-on to the system and call up on their workstations pages of data (i.e. entered eCRFs) which have not yet been validated and validate them. The filter controls of 48 in Figure 3 permit such pages to be located quickly, due to the running of checks as soon as data is committed to the database. Queries may arise during the validation and it may be necessary to contact the investigator's site 25 to resolve those queries. The validator can correct aspects of the eCRF page and then resubmit it to the database whereupon it will become the "most recent" version of that eCRF page. As with the original data entry, the new pages are digitally signed, preferably with a biometric of the validator provided on log-on to the system.

After the data has been validated it may be exported at step 26 and archived at step 27.

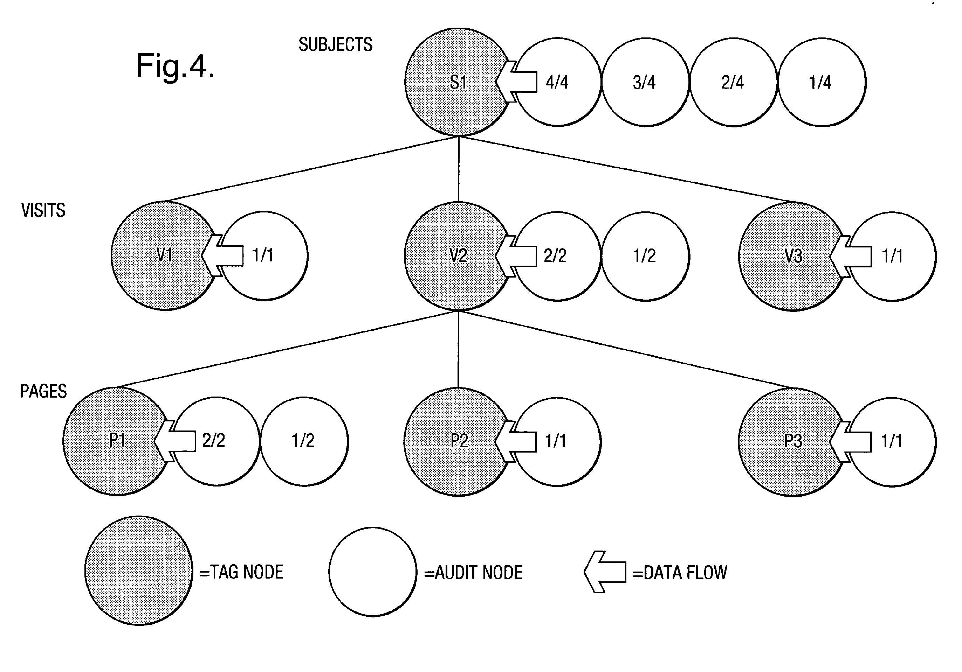

In accordance with the present invention the natural data hierarchy is used by the database service in structuring a corresponding structure of linked data nodes in the database. A fragment of such a structure is illustrated in Figure 4, this corresponding to the levels of subject's visits and pages (i.e. the bottom levels) of Figure 1. Figure 4 corresponds to the data for a particular subject S1. This subject has a tag node 50 from which depend tag nodes 51, 52 and 53 corresponding to the three visits V1, V2 and V3 which the subject has made. Figure 4 illustrates the three pages of eCRF, P1, P2 and P3 which were submitted in the course of visit V2 and these form tag nodes 54, 55 and 56. In accordance with the invention each tag node does not itself store the data which is entered. Instead the data is stored in one or more audit nodes which are children of the tag node (and are labelled with letter suffixes in Figure 4 i.e. as 50a, b, c, d for audit nodes associated with tag node 50, 52a, b for audit nodes associated with tag node 52 etc). The "current" data in the database is that which is on the most recent audit node, and in response to a call for data the tag node supplies the data from the most recent audit node as indicated by the arrows in Figure 4. Thus, for example, taking the tag node 50 which corresponds to this particular subject S1, four audit nodes 50a, b, c, d are shown corresponding to the current information 50d about the subject (page 4/4), and three earlier versions (50a-c) of that data. The earlier versions may correspond, for example, to previous address of the subject, or to versions of the eCRF form containing errors in the subject's details, which have subsequently been corrected. Thus the initial data entered about the subject is found in the audit node 1/4, and updated or corrected versions are present in pages 2/4 and 3/4, with the latest version in page 4/4. Similarly at the visits level visit V2 also has an earlier version (page1/2) of data relating to that visit, which data was updated or corrected resulting in the current page 2/2. At the page level page P1 is illustrated as having a current version (2/2) and a preceding version (1/2). The preceding version may correspond to an eCRF page as it was first-entered, before validation, and page 2/2 may be the same page after validation, possibly with some correction by the validator.

This structure therefore provides an easy way of storing data together with a reliable audit trail. Further, it is very easy to add further tag nodes corresponding to new visits, new pages or new subjects, or, higher up the hierarchy, it is possible to add new centres or even new countries.

It will be appreciated from Figure 4, therefore, that the structure of the database is made up of the tag-nodes. Each tag node has one or more audit-node children, each holding a different version of data for that location in the structure. Each audit node applies to a specific tag node, and plays no part in the structure hierarchy (in particular audit nodes never have children of their own). The data entered is stored on the audit nodes, rather than the tag nodes, and each tag node transparently provides data from its latest audit node as the "current data". Audit nodes are immutable, in this embodiment by making them digitally signed and undeletable. Where necessary, a delete action is implemented simply as an attribute stored on the audit node indicating that it is "considered" deleted. Thus the audit trail provided by the audit nodes is simple, unavoidable by the user, is intuitive, naturally distributed and efficient.

Although the tag nodes do not store entered data, in this embodiment they are provided with a place holder for information deduced from audit nodes at or below that tag node. Typically this deduced data is summary data. For example a user may wish to know the number of completed visits to a particular centre and the number of data errors at that centre. The summary is prepared by the deduciblemaker service provided on each workstation. This service supplies deduced data to a "deducible name space" defined for each tag node. The deducible name space has four properties:-
1. It is a form of cache;
2. It has the same hierarchical structure as the data;
3. It uses a hierarchy of so-called deducible makers (the applications which create the deduced data); and
4. It is not replicated between stations but maintained locally.

The deducible name space contains the summary data, and also stores links to child nodes which when followed using the filter buttons 48 of Figure 3 will terminate in the particular nodes of interest. For example, if the deduced data is data about the number of pages which contain errors (as assessed by automatic checks and/or manual checks which set the state of the clinical status flags for those pages), the deducible maker application not only regularly interrogates the nodes below it in the database to find out the number of errors, but also maintains links to the pages with errors. This means that the user, viewing the summary information, can navigate down these links to see the data which contributed to the summary. The deduced information is maintained by re-deducing all parents of a node which has changed. In order to optimise this procedure, the re-deduction is not carried out every time a single node changes, but instead the application lingers at the bottom of the hierarchy in case other nodes also change.

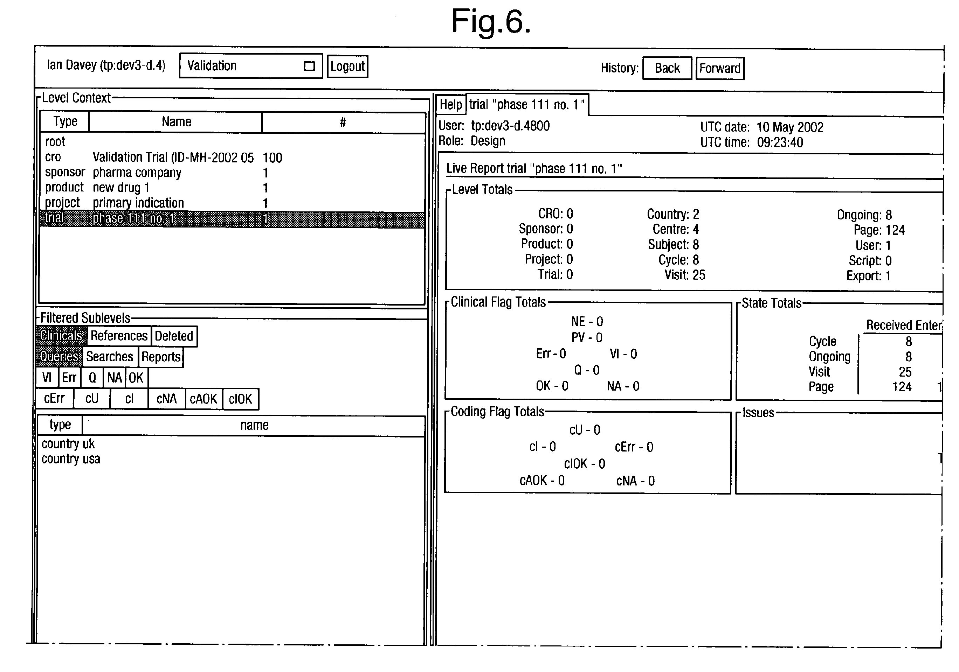

An example of a view of deduced data is shown in Figure 6. In this embodiment of the system, the information displayed on the right hand side shows five frames containing Level Totals, Clinical Flag Totals, State Totals, Coding Flag Totals, and Issues. Each of these frames contain information entirely deduced from data below this part of the hierarchy (the trial called "phase 111 no. 1" as displayed in the Level Context near the top left of the screen). By way of example, the State Totals frame contains a table indicating that 115 pages have been QC-ed. When more pages are QC-ed, either by replicating from other computers or by QC-ing on this computer, the number 115 will automatically change without requiring user-interaction. The computation of this information is the responsibility of the deduciblemaker service, which ensures that this information is up-to-date for this local computer.

In addition to consisting of summary information, deduced data also provides the links to areas of interest in the database according to criteria based upon the deduced summary information. Thus the system is efficiently optimised to respond quickly to the user requesting more detail (or drilling-down) as a result of viewing the deduced summary information. In this embodiment of the system, the controls and the "filtered sublevels" on the left hand side of Figure 6 allow the user to perform the drilling-down into the database described above.

The nodes (both tag and audit nodes) in the system are provided with a simple, globally unique and fixed identity calculated by the IDs service. This has the advantage of simplifying the calculation of replication requirements, providing references for hyperlinking around the database, allowing the references to be printed as barcodes (thus forming printable hyperlinks) and providing a way of trivially identifying which nodes were generated on which stations. In order to achieve this the node identity is made up of the following hierarchy of components:-
1. Customer/sponsor identity;
2. Station identity;
3. Station sequence; and
4. Station counter.

Each of these components is a string and/or number. The highest category is the customer/sponsor identity, which is used to group together a set of workstations. For a given set each workstation is provided with a unique station identity. Both customer and station identities are allocated centrally when the station is manufactured. The station counter is an integer which is simply incremented for each node generated at the station. This is a purely local operation requiring no interaction with other machines. The station sequence is also allocated locally at a workstation, and allows a station to be re-set without centralised administration and without re-using identities. Thus the sequence code would increment after each re-set of a workstation.

Because each node in the database has a globally unique and fixed identity, these identities may be used to implement hyperlinks to every location in the database. Both tag nodes and audit nodes have these identities, so both can be he targets of hyperlinks. An example of a node identity is shown in Figure 5 in which the four components of the hierarchy are separated by "-" symbols. Thus the customer/sponsor identity is "cd", the station identity is "dev3", the station sequence is "a" and the station counter is "56". The corresponding barcode which forms a printable hyperlink, is also shown in Figure 5. This barcode could be used, for example, to label samples associated with a particular visit (i.e. by carrying the identity of the visit node).

The replicate service mentioned above is responsible for synchronising data between stations, and works by selectively copying database structure (tag nodes) and database content (audit nodes). The calculation which determines what data needs to be replicated is simple and efficient, and consists essentially of a mathematical set subtraction. For example, to determine what data workstation A needs from workstation B, the set of nodes below point P on workstation B is subtracted from the set of nodes below point P on workstation A. The resulting difference is a set of both structural tag nodes and data audit nodes. The structure must be replicated first, by adding the next tag node in a tree-growing order which ensures that every replicated tagnode is always connected to the local hierarchy. Subsequently, the data can be replicated by copying the audit nodes (in any order). In parallel with this replication activity, the deduciblemaker service will locally maintain the deduced information so that the user's view of the database is always kept up-to-date.

The replicate operation occurs independently of data entry to a workstation. Thus the replicate service can operate whenever a connection becomes available within a given scheduled time period, while a user can enter data to the workstation even when communication with other workstations is unavailable. In general not every workstation will carry a complete set of all nodes in the entire database. For example, all eCRFs for a given centre may be replicated only to those workstations which need data for that centre, and not to workstations with users focussed on data from other centres (for example, in different countries). Data from multiple centres may be replicated to workstations belonging to users higher in the hierarchy, such as trial managers. Note that this selective replication is why deducible data is only deduced locally and not itself replicated (as mentioned above).

Particular users who have different roles within the clinical trial can see different views of the data. Thus the view of the data which a particular user sees depends on: 1) the position within the database tree; 2) the user's role; and 3) the time. Users may have different roles and be provided with different information and possibilities for action within their different roles. As regards the time aspect of the view, this is linked to the provision of the audit trail. If the database is viewed by filtering out all of the most recent entries after a given time (by reference to the time stamp of the audit nodes) then the database has, in essence, been rolled back along the audit trail to that time.

The database is used not only to store data, but also to store program code. In particular the Gui service which controls the graphical user interfaces of the workstations is stored distributed on the database as audit nodes. Different versions of the service may be prepared for different geographical areas (for instance using different languages) and these may be replicated to the appropriate workstation using the replicate service. The storage of the service on audit nodes means that the audit trail acts to provide version control for the service. Of course this advantage can be extended to others of the services forming the database management system by storing them also as audit nodes distributed across the database.

## Claims

1. A database system for storing data in a database, the database comprising a structure of linked data nodes corresponding to a natural hierarchy of the data, the nodes being of two types: tag nodes, forming the linked structure of the database, and audit nodes which are children of tag nodes, data at a particular level of the natural hierarchy being entered into the database being stored in audit nodes formed on entry of said data as children to the tag node at the point in the structure corresponding to said level, the audit nodes being undeletable and timestamped, changes to the stored data being effected by the addition of new audit nodes, whereby the audit nodes form an audit trail for the database.

2. A database system according to claim 1 wherein a request to return the value of current data stored in the database is serviced by a tag node extracting the value of its most recently added child audit node.

3. A database system according to claim 1 wherein a request to return the value of data as recorded at a given time in the past is serviced by a tag node extracting the value from the most recently added child audit node before said time.

4. A database system according to claim 1, 2 or 3 wherein the tag nodes store secondary data, the secondary data being data which has been automatically deduced from the data in the audit nodes.

5. A database system according to claim 4 wherein the secondary data at a particular tag node comprises summary data summarising the content of audit nodes below said particular tag node in the natural hierarchy.

6. A database system according to any one of the preceding claims comprising a replication service for replicating data by copying nodes.

7. A database system according to claim 6 wherein the replication is achieved by first copying database structure as tag nodes and second copying data as audit nodes.

8. A database system according to claim 7 wherein the replication is selective by only copying nodes below given points in the hierarchy.

9. A database system according to claim 5, 6, 7 or 8, wherein said replication service occurs asynchronously of data input to the database.

10. A database system according to any one of the preceding claims wherein the audit nodes comprise pages of data digitally signed by the user entering the data.

11. A database system according to any one of the preceding claims wherein each node has a unique identification code.

12. A database system according to claim 11 further comprising a bar code generator for generating a bar code encoding said unique identification code whereby physical items may be associated with a node by application thereto of said generated bar code.

13. A database system according to claim 11 or 12 wherein said unique identification code comprises codes representing a workstation, a sequence code for that workstation and a counter for that sequence.

14. A database system according to claim 13 wherein said unique identification code further comprises a code representing a user.

15. A database system according to any one of the preceding claims comprising a plurality of workstations across which the database is distributed, said providing for data input to said database, each of said workstations being usable in isolation to add data to the database.

16. A database system according to any one of the preceding claims wherein graphical user interfaces are provided for guiding entry of data to the database, the configuration of said graphical user interfaces being controlled by configuration data stored in audit nodes distributed across said database.

17. A database system according to claim 16 wherein the configuration of said graphical user interfaces may be changed by replication of new audit nodes across the database.

18. A database system according to claim 16 or 17 wherein the configuration of a graphical user interface for guiding data entry at one level in the hierarchy is controlled by configuration data stored in an audit node which is a child of a tag node at a higher level in the hierarchy.
